# EUROPEAN PATENT SPECIFICATION

(11) **EP 2 237 839 B1**
(45) Date of publication and mention of the grant of the patent: **12.04.2017**
(21) Application number: 08724588.2
(22) Date of filing: 17.01.2008
(51) Int. Cl.: A62B 7/08, B01D 53/86, B01D 53/75, B01D 53/04, B01D 53/72, F24F 3/16

(54) **FILTERS FOR REMOVAL OF VOLATILE SILOXANES AND LIFETIME EXTENSION OF PHOTCATALYTIC DEVICES**
FILTER ZUR ENTFERNUNG VON FLÜCHTIGEN SILOXANEN UND VERLÄNGERUNG DER LEBENSDAUER VON FOTOKATALYTISCHEN VORRICHTUNGEN
FILTRES POUR L'ÉLIMINATION DE SILOXANES VOLATILS ET L'EXTENSION DE DURÉE DE VIE DE DISPOSITIFS PHOTOCATALYTIQUES

(43) Date of publication of application: 13.10.2010
(73) Proprietor: Carrier Corporation, Farmington, CT 06034 (US)
(72) Inventor: SCHMIDT, Wayde, R., Farmington, CT 06034 (US); CIPOLLINI, Ned, E., Farmington, CT 06034 (US); ARSENAULT, Sarah, Farmington, CT 06034 (US)
(74) Representative: Towler, Philip Dean
(86) International application number: PCT/US2008/000627
(87) International publication number: WO 2009/091367

(56) References cited:
- EP-A1- 0 570 835
- EP-A1- 0 931 581
- WO-A1-2008/024329
- WO-A2-2007/143041
- US-A1- 2007 003 762
- US-B2- 6 582 666
- US-B2- 7 255 831

## Description

This invention relates generally to the use of ultraviolet photocatalytic oxidation (UV-PCO) technology for the improved decontamination of fluids in fluid purifier systems, especially in air purification systems. More specifically, the present invention relates to removing volatile silicon-containing compounds (VSCCs) by enhancing a surface characteristic of a VSCC filter located upstream of a photocatalyst in a UV-PCO air purifier system.

Some buildings utilize air purification systems to remove airborne substances such as benzene, formaldehyde, and other contaminants from the air supply. Some of these purification systems include photocatalytic reactors that utilize a substrate or cartridge containing a photocatalyst, generally an oxide-based semiconductor. When placed under an appropriate light source, typically a UV light source, the photocatalyst oxide interacts with airborne water molecules to form hydroxyl radicals or other active species. The hydroxyl radicals then attack the contaminants and initiate an oxidation reaction that converts the contaminants into less harmful compounds, such as water and carbon dioxide. It is further believed that the combination of water vapor, suitably energetic photons and a photocatalyst also generates an active oxygen agent like hydrogen peroxide as suggested by W. Kubo and T. Tatsuma, 20 Analytical Sciences 591-93 (2004).

A commonly used UV photocatalyst is titanium dioxide (TiO₂), otherwise referred to as titania. Degussa P25 titania and tungsten oxide grafted titania catalysts (such as tungsten oxide on P25) have been found to be especially effective at removing organic contaminants under UV light sources. See US Patent 7,255,831 "Tungsten Oxide/Titanium Dioxide Photocatalyst for Improving Indoor Air Quality" by Wei et al.

A problem with air purification systems using UV-PCO technology has arisen. Currently available systems exhibit a significant loss in catalytic ability over time. This loss of catalytic ability has been at least partially attributed to volatile silicon-containing compounds (VSCCs), such as certain siloxanes, present in the air.

The aggregate amount of volatile organic compounds (VOCs) in air is typically on the order of 1 part per million by volume. In contrast, VSCC concentrations are typically two or more orders of magnitude lower. These VSCCs arise primarily from the use of certain personal care products, such as deodorants, shampoos and the like, or certain cleaning products or dry cleaning fluids, although they can also arise from the use of room temperature vulcanizing (RTV) silicone caulks, adhesives, lubricants, and the like. When these silicon-containing compounds are oxidized on the photocatalyst of a UV-PCO system, they form relatively non-volatile compounds containing silicon and oxygen that may deactivate the photocatalyst. Examples of non-volatile compounds of silicon and oxygen include silicon dioxide, silicon oxide hydroxide, silicon hydroxide, high order polysiloxanes, and the like. These compounds may be at least partially hydrated or hydroxylated when water vapor is present. Increasing the catalyst surface area alone does not necessarily slow the rate of deactivation as might be expected if the deactivation occurred by direct physical blockage of the active sites by the resultant non-volatile compound containing silicon and oxygen.

WO 2007/143041 describes a filter in a UV-PCO air purification system which is chemically attractive to VSCCs. EP 0931581 also describes a UV-PCO air purification system which converts VSCCs to particles.

There is a need for improved UV-PCO systems that can aid in the elimination of fluid borne contaminants in a fluid purifier and can operate effectively in the presence of typically encountered levels of VSCCs such as siloxanes.

### SUMMARY

An ultraviolet photocatalytic oxidation air purification system includes a VSCC filter upstream of the photocatalyst. An additive is bonded to or specifically associated with the surface of the VSCC filter to enhance removal of VSCCs by enhancing a surface characteristic of the filter. The additive enhances removal by creating an acidic site, by increasing the surface area of the filter, or by facilitating preferential interaction between the surface and the VSCC, thereby promoting the VSCCs to bond with the VSCC filter. During times of non-operation, removed VSCCs may be further immobilized on the VSCC filter by mineralization. The removal of the VSCCs upstream of the photocatalyst increases the useful life of the photocatalyst.

Thus, according to the invention there is provided a method for removing volatile silicon containing compounds (VSCC) from an airstream by ultraviolet photocatalytic oxidation (UV-PCO), the method comprising passing the airstream through a filter, said filter comprising:
a filter body comprising at least one member selected from a group consisting of nanofiber material, microfiber material, granular material, homogeneous material, crystalline material, glassy material, multimaterial material, layered structure material, composited structure material, and mixtures thereof; and an additive attached to a surface of the filter body and chemically attractive to volatile silicon-containing compounds (VSCCs), wherein the additive creates an acidic site on the surface of the filter body and said additive comprises at least one of sulfuric acid, trifluoromethane sulfuric acid, a sulfonic acid group, and a polyelectrolyte containing at least one sulfonic acid group, or wherein said additive comprises a reaction-inducing material being an iron-doped silica network, an iron-doped titania network, an iron-doped titania-tungsten network, or a mixture thereof; and passing the airstream from the filter to a photocatalytic reactor.

### BRIEF DESCRIPTION OF THE DRAWINGS

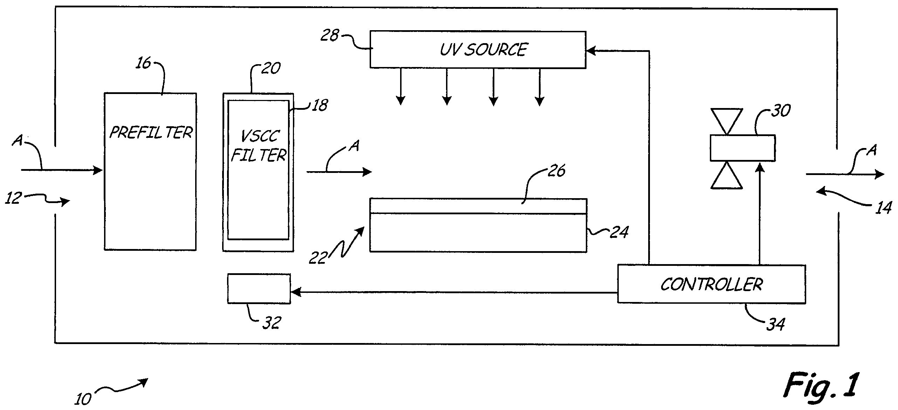

Figure 1 is a schematic diagram of an ultraviolet photocatalytic oxidation air purification system.

### DETAILED DESCRIPTION

FIG 1 is a schematic diagram of an ultraviolet photocatalytic oxidation air purification system 10, which includes inlet 12, outlet 14, optional prefilter 16, VSCC filter 18, filter surface treatment 20, photocatalytic reactor 22 (which includes substrate 24, photocatalytic coating 26, and UV source 28), fan 30, mineralization unit 32, and controller 34.

Ambient air is drawn into system 10 through inlet 12 by fan 30. Airstream A passes through prefilter 16 and VSCC filter 18 and then through photocatalyst reactor 22 and fan 30. to outlet 14. Prefilter 16 removes dust and particles by trapping the dust and particles. VSCC filter 18 removes volatile silicon-containing compounds (VSCCs) so they do not reach photocatalytic coating 26 and degrade performance of photocatalytic reactor 22. Other volatile organic compounds may also be removed by adsorption on either filter. Although FIG. 1 depicts prefilter 16 and VSCC filter 18 as separate structures, they may be incorporated into a single filter that performs the functions of prefilter 16 and VSCC filter 18.

Within photocatalyst reactor 22, ultraviolet radiation from UV source 28 is absorbed by photocatalyst coating 26, which causes photocatalyst coating 26 to interact with airborne water molecules to produce reactive species such as hydroxyl radicals, hydrogen peroxide, hydrogen peroxide radicals and superoxide ions. These reactive species interact with VOCs in the air to transform the VOCs into byproducts such as carbon dioxide and water. Therefore, airstream A contains less contaminates as it exits system 10 through outlet 14 than it contained when it entered system 10 through inlet 12.

In FIG. 1, substrate 24 is depicted schematically as a flat plate. In practice, substrate 24 can take a number of different forms, which may be configured to maximize the surface area on which photocatalytic coating 26 is located or to maximize the extent of non-laminar (e.g. turbulent) flow through the substrate. One example is a honeycomb structure on which photocatalyic coating 26 is deposited and through which airstream A passes.

Experimental evidence has highlighted the need to protect the photocatalyst coating 26 from contamination and deactivation by VSCCs. The major source of these VSCCs is believed to be the family of compounds containing volatile methyl siloxanes (VMS) commonly found in cleaners, personal deodorants, shampoos, and a variety of other personal and commercial products. Common members of the VMS family include hexamethyl cyclotrisiloxane and octamethyl cyclotetrasiloxane, often referred to D₃ and D₄, respectively. Larger molecules D₅, D₆, D₇ and so on are also known. Related VSCCs, including linear siloxanes, are also of concern. Cyclic siloxanes can generally be described as Dₓ, where D defines the difunctional unit [-(CH₃)₂Si-O-] and the subscript x represents the number of such units in the ring. For linear siloxanes, the descriptor M is used to represent the monofunctional unit [(CH₃)₃Si-O-], and the linear structures are represented as MD_{y}M, with the subscript y as an integer equal to or greater than 1, and the smallest linear structure shown as M₂.

VSCCs are removed from the airstream A upstream of photocatalytic reactor 22 through VSCC filter 18. VSCC filter 18 can be constructed to optimally purify the air based on the characteristics of the incoming airstream. VSCC filter 18 can be constructed of woven material, non-woven material, particulate matter, monolithic structures, mesh, porous supports, foams, arrays of cells, honeycombs or combinations thereof. The filter material can be fibrous (e.g. nanofibers, microfibers), granular, homogeneous, crystalline, multimaterial, layered structures or composite structures, and may contain crystalline or glassy or both types of materials. The fibrous materials used may be comprised of similar or different fiber diameters, chemistries, and functionalities. Fibers may be organic, inorganic, glass or combinations thereof. High or low surface area materials, or combination thereof, may be used. Examples of high surface area materials include carbons, organics, inorganics, metals and alloys, zeolites, polymer membranes, oxides, non-oxides, aerogels, and combinations thereof. VSCC filter 18 may contain uniformly or nonuniformly sized and distributed voids or pores.

A VSCC filter can be used in combination with other filters. For example, a plurality of VSCC filters with the same or different functionalities may be used in series. Additionally, a VSCC filter or a series of VSCC filters can be used in combination with carbon adsorbents (integrated into the filter structure or separate) or alternate filter types such as HEPA filters.

In the present invention, a surface characteristic of VSCC filter 18 is altered or enhanced by filter surface treatment 20. Filter surface treatment 20 incorporates an additive onto the surface of VSCC filter 18 that enhances a surface characteristic of VSCC filter 18 and is chemically attractive to the VSCCs. Filter surface treatment 20 enhances removal of the VSCCs from airstream A. Filter surface treatment 20 may be applied to the entire surface or to a selected surface or surfaces of VSCC filter 18. A surface of VSCC filter 18 includes any part of VSCC filter 18 that can come in contact with airstream A. This includes the interior cell walls of a honeycomb structure and the exposed surfaces of porous supports. The additive in surface treatment 20 alters a surface characteristic of VSCC filter 18 by bonding to the filter. The additive alters the filter's surface by creating an acidic site, by increasing the surface area, or by providing a preferential reactive site, including a catalyst.

First, the additive in surface treatment 20 can make the surface of VSCC filter 18 acidic. For example, the additive may be sulfuric acid, trifluoromethane sulfonic acid, or a compound containing at least one sulfonic acid group. While SiO₂ is essentially entirely inert to sulfuric acid, the Si-O bonds of Dₓ molecules may provide sufficient strain to render these species sufficiently reactive to sulfuric acid to form sulfate esters. These sulfate esters are partially or fully soluble and dissolve in sulfuric acid. In the presence of sufficient water, the sulfate esters can hydrolyze to form polymeric, relatively non-volatile polysiloxanes (silicones). Subsequent dehydration can cause further condensation and polymer chain growth, eventually forming non-volatile solids.

In one embodiment, sulfuric acid is incorporated onto an activated carbon or charcoal filter. The activated carbon filter is impregnated, infiltrated, or saturated with sulfuric acid by soaking an activated carbon cloth in sulfuric acid, and removing and rinsing the cloth. The sulfuric acid does not chemically change the carbon, instead, it bonds to the carbon or is otherwise retained in residual voids or porosity in the carbonaceous material (e.g. mesoporosity). When airstream A passes through VSCC filter 18, the VSCCs are attracted to and at least partially dissolve in the sulfuric acid, delaying or preventing the VSCCs from reaching photocatalyst reactor 22. In this embodiment, the sulfuric acid supported on the carbon functions as a heterogeneous catalyst. Alternate heterogeneous catalyst examples include acid clays, ion exchange resins, and acidic zeolites.

In another embodiment, an acidic surface is created by incorporating a polyelectrolyte containing sulfonic acid groups onto an active carbon filter. The sulfonic acid groups (R-SO₂OH) may be part of larger aliphatic or aromatic hydrocarbons, or part of carbon-, silicon-, or phosphorus-based polymeric species. Nafion® is one commercially available example of a polyelectrolyte containing sulfonic acid groups. Other commercial examples exist and compounds or polymers can be readily synthesized with sulfonic acid functionality. The H atom makes the functional group highly acidic and stable as the salt form. In the presence of water (e.g. moisture or humidity), sulfonic groups can serve as a reactive medium for VSCCs. These highly acidic environments at least partially solubilize and polymerize volatile and semi-volatile VSCCs by either trapping them irreversibly or creating less volatile silicon-containing species.

Additionally, a catalyst may be selected and incorporated onto the acidic surface to promote further hydrolysis, oxidation, or polymerization of the trapped VSCCs. For example, catalytic particles comprising or containing noble metals and alloys may be used.

Nanoparticles of platinum, rhodium, rhenium, palladium, gold, silver, osmium, ruthenium, or indium metals or their oxides may be used In one example, platinum (possibly containing platinum oxide), which is commonly used to promote reactions in fuel cells, is incorporated onto the filter as a catalyst. The filter may be comprised of materials other than, or in addition to, active carbon, such as charcoal, acid clay, ion exchange resins, acidic zeolites or any combination thereof.

Additionally, the additive in surface treatment 20 can enhance removal of VSCCs by increasing the surface area of filter 18. The increased surface area increases the adsorptive properties of the filter. Examples of surface area increasing additives include oxide gels, metal oxide gels and mixed metal oxide gels. In a specific example, silica gel (an oxide gel) is used. Silica gel is a highly porous structure with a surface area around 800 m²/gram of materialal (highly tailorable based on processing) that would increase the surface area of the filter through its open porosity. Silica gel is an excellent adsorbent material and contains a continuous network of silicon and oxygen. However, it adsorbs both VSCCs and water, and water adsorption can compete with and prevent subsequent adsorption by contaminant species such as VSCCs by occupying active sites on the silica gel. To mitigate or control water adsorption, the high surface oxide systems are rendered with a bound organic functionality (e.g. alkyl or hydrocarbon chains such as octyl-modified). The resulting silica gel would be relatively hydrophobic compared to the untreated gel.

A chemically similar substance with extensive porosity is an aerogel. Silica gel and other metal oxide and mixed metal oxide compounds can be in the form of aerogels. An aerogel can be created by processing sol-gel precursors or colloidal silica under conditions that render an aerogel. For example, a sol-gel precursor can be coated onto either a honeycomb or porous filter and then processed under conditions that render the sol-gel an aerogel. Aerogels are also commercially available. Cabot Corporation offers Nanogel®, a silica-based aerogel which is hydrophobic, in a powder, bead or blanket form. Commercially available aerogel materials typically have surface areas nominally 600-800 m²/g, which is one order of magnitude higher than the Degussa P25 TiO₂ typically used as a UV photocatalyst. Aerogels are generally hydrophilic as prepared, but can be rendered more hydrophobic by chemical treatment. Metal oxide gel and aerogel processing techniques are known to one skilled in the art.

Any suitable oxide or mixed-oxide gel or aerogel that is derivatized to render the surface hydrophobic may be used as the additive in filter surface treatment 20. For example, oxide gels, metal oxide gels and mixed metal oxide gels having hydrophobic surfaces may be used. Si-O based aerogels may also be used. The Si-O chemistry of the silica increases the likelihood that the VSCCs, which also have Si-O type functionality, associate and react with the surface of the filter. Further, a mixture of surface area increasing additives can be used to control site competition between purely organic VOC and silicon-containing VMS or related VSCCs.

The additive in surface treatment 20 can be a reaction inducing material which facilitates a preferential interaction or reaction with VSCCs. This additive renders the surface of filter 18 more reactive to VSCCs so that the VSCCs bond to filter surface treatment 20 on VSCC filter 18 before reaching photocatalyst reactor 22. For example, the presence of iron (Fe) in oxide-based ceramic materials renders the ceramic phase more reactive towards silica-type networks. For example, Fe-O-Si networks are easy to form (e.g. through sol-gel chemical processing). Fe-O linkages with Ti-O (as found in TiO₂) and Si-O (as found in SiO₂) are also easy to form to create mixed oxide networks (e.g. Fe-O-Si- and Fe-O-Ti-). It follows that the presence of iron (Fe) on a titania (TiO₂) substrate reacts easily with species containing Si-O-bonding, such as VSCCs. Iron-doped titania is available commercially or may be created using a process known to one skilled in the art. Commercial iron-doped TiO₂ (2 wt% Fe) is available from Degussa. Other oxides or mixed oxides (e.g. titanium oxide plus tungsten oxide) may also be used as the mateπal to be doped.

Iron-doped silica networks are also beneficial because of their increased surface areas. The benefits of both silica and titania iron-doped networks can be achieved by combining the networks. Such combinations of titania and silica iron-doped networks can be created via mechanical mixing of the constituents or through chemical mixing or co- synthesis via solution or aerosol techniques. Other transition metal dopants may be substituted for, or used in combination with iron.

Any of the above filter and additive materials can be used alone or in combination to remove VSCCs. For example, hydrophobic aerogels can be used with activated carbon to remove both VSCCs and VOCs. The additives may be used as particulate additives to a filter or may be coated onto a separate active or passive support. For example, an activated carbon cloth (available from Calgon Carbon) can be impregnated with acidic polyelectrolyte or sulfuric acid to make an active support for volatile or semi-volatile siloxane removal. A passive support for siloxane removal is created by coating an aluminum honeycomb with an additive.

Coating or impregnation methods, if necessary, can be applied externally to the VSCC filter 18 through vapor, solution, slurry-based, dipping or similar deposition methods, or can be grown in-situ from selected starting compositions or architectures. Coating, impregnation, or modification can be single or multi-step with the same or different compositions and/or distributions.

During times of non-operation, contaminants may be immobilized further on VSCC filter 18 by mineralization. Mineralization causes additional oxidation and converts the partially oxidized siloxane molecules to silica, further rendering it unavailable for volatilization Mineralization may also be caused by exposure to one or more of the following microwave radiation, inductive heating, thermal treatment, air pulsing, ultrasonics, UV-PCO, plasma treatment, mechanical agitation, chemical washing, or other suitable methods. The VSCC filter 18 and surface treatment 20 may be constructed to be easily maintained and economical so as to minimize material and ownership costs.

Controller 34 coordinates operation of mineralization unit 32 with the operation of fan 30 and UV source 28. For example, mineralization unit 32 may be operated when UV source 28 is not in operation. In some cases, fan 30 may be operated in conjunction with mineralization unit 32, for example, to draw moist or heated air into VSCC filter 18 to further the mineralization process.

Although the present invention has been described with reference to preferred embodiments, workers skilled in the art will recognize that changes may be made in form and detail without departing from the scope of the invention as defined by the appended claims.

## Claims

1. A method for removing volatile silicon containing compounds (VSCC) from an airstream by ultraviolet photocatalytic oxidation (UV-PCO), the method comprising passing the airstream through a filter, said filter comprising:
a filter body comprising at least one member selected from a group consisting of nanofiber material, microfiber material, granular material, homogeneous material, crystalline material, glassy material, multimaterial material, layered structure material, composited structure material, and mixtures thereof; and
an additive attached to a surface of the filter body and chemically attractive to volatile silicon-containing compounds (VSCCs), wherein the additive creates an acidic site on the surface of the filter body and said additive comprises at least one of sulfuric acid, trifluoromethane sulfuric acid, a sulfonic acid group, and a polyelectrolyte containing at least one sulfonic acid group, or wherein said additive comprises a reaction-inducing material being an iron-doped silica network, an iron-doped titania network, an iron-doped titania-tungsten network, or a mixture thereof; and
passing the airstream from the filter to a photocatalytic reactor.

2. The method of claim 1 wherein the airstream comprises volatile organic compounds (VOCs) and VSCCs, and wherein the photocatalytic reactor reacts with VOCs.

3. The method of claim 1 wherein the additive creates an acidic site on the surface of the filter comprising at least one of sulfuric acid, trifluoromethane sulfuric acid, a sulfonic acid group, and a polyelectrolyte containing at least one sulfonic acid group.

4. The method of claim 3 wherein the sulfonic acid group is part of an aliphatic hydrocarbon, an aromatic hydrocarbon, a carbon-based polymeric species, a silicon-based polymeric species, or a phosphorus-based polymeric species.

5. The method of claim 3 wherein the additive further comprises a catalyst.

6. The method of claim 5 wherein the catalyst comprises at least one metal or oxide member selected from the group consisting platinum, rhodium, rhenium, palladium, gold, silver, osmium, ruthenium, iridium and mixtures thereof.

7. The method of claim 3 wherein the filter body further comprises at least one member selected from the group consisting of active carbon, charcoal, acid clay, ion exchange resins, acidic zeolites, and mixtures thereof.

8. The method of claim 1 wherein the additive further comprises a material which increases surface area of the surface.

9. The method of claim 8 wherein the additive further comprises at least one member selected from the group consisting of an oxide gel, a metal oxide gel, a mixed metal oxide gel, a silica gel, a silica gel having a hydrophobic surface and an aerogel.

10. The method of claim 9 wherein the additive has Si-O bonding.

11. The method of claim 1, wherein the additive comprises an iron-doped silica network, an iron-doped titania network, an iron-doped titania-tungsten network, or a mixture thereof.

## Patentansprüche

1. Verfahren zum Entfernen von flüchtigen siliciumhaltigen Verbindungen (VSCC) aus einem Luftstrom durch photokatalytische Ultraviolett-Oxidation (UV-PCO), wobei das Verfahren Folgendes umfasst: Leiten des Luftstroms durch einen Filter, wobei der Filter Folgendes umfasst:
einen Filterkörper, der zumindest ein Element umfasst, das aus einer Gruppe bestehend aus einem Nanofasermaterial, Mikrofasermaterial, granularem Material, homogenen Material, kristallinen Material, glasartigen Material, Mehrschicht-Material, Schichtstruktur-Material, Material mit zusammengesetzter Struktur und Mischungen davon ausgewählt ist; und
ein Additiv, das an einer Fläche des Filterkörpers angebracht und chemisch anziehend für flüchtige siliciumhaltige Verbindungen (VSCCs) ist, wobei das Additiv eine saure Stelle auf der Fläche des Filterkörpers erzeugt und das Additiv zumindest eines von Schwefelsäure, Trifluormethan-Schwefelsäure, einer Sulfonsäuregruppe und einem zumindest eine Sulfonsäuregruppe enthaltenden Polyelektrolyt umfasst oder wobei das Additiv ein reaktionsvermittelndes Material umfasst, das ein eisendotiertes Silicium-Netzwerk, ein eisendotiertes Titandioxid-Netzwerk, ein eisendotiertes Titandioxid-Wolfram-Netzwerk oder eine Mischung davon ist, und
Leiten des Luftstroms von dem Filter zu einem photokatalytischen Reaktor.

2. Verfahren nach Anspruch 1, wobei der Luftstrom flüchtige organische Verbindungen (VOCs) und VSCCs umfasst und wobei der photolatalytische Reaktor mit VOCs reagiert.

3. Verfahren nach Anspruch 1, wobei das Additiv eine saure Stelle auf der Fläche des Filters erzeugt, die zumindest eines von Schwefelsäure, Trifluormethan-Schwefelsäure, einer Sulfonsäuregruppe und einem zumindest eine Sulfonsäuregruppe enthaltenden Polyelektrolyt umfasst.

4. Verfahren nach Anspruch 3, wobei die Sulfonsäuregruppe Teil eines aliphatischen Kohlenwasserstoffs, eines aromatischen Kohlenwasserstoffs, einer polymeren Spezies auf Kohlenwasserstoffbasis, einer polymeren Spezies auf Siliciumbasis oder einer polymeren Spezies auf Phosphorbasis ist.

5. Verfahren nach Anspruch 3, wobei das Additiv ferner einen Katalysator umfasst.

6. Verfahren nach Anspruch 5, wobei der Katalysator zumindest ein aus der Gruppe bestehend aus Platin, Rhodium, Rhenium, Palladium, Gold, Silber, Osmium, Ruthenium, Iridium und Mischungen davon ausgewähltes Metall oder Oxidelement umfasst.

7. Verfahren nach Anspruch 3, wobei der Filterkörper ferner zumindest ein aus der Gruppe bestehend aus Aktivkohle, Holzkohle, saurem Ton, Ionenaustauschharzen, sauren Zeolithen und Mischungen davon ausgewähltes Element umfasst.

8. Verfahren nach Anspruch 1, wobei das Additiv ferner ein Material umfasst, das die Oberfläche der Fläche erhöht.

9. Verfahren nach Anspruch 8, wobei das Additiv ferner zumindest ein aus der Gruppe bestehend aus einem Oxidgel, einem Metalloxidgel, einem Mischmetalloxidgel, einem Siliciumgel, einem eine hydrophobische Oberfläche aufweisenden Siliciumgel und einem Aorogel ausgewähltes Element umfasst.

10. Verfahren nach Anspruch 9, wobei das Additiv eine Si-0-Bindung aufweist.

11. Verfahren nach Anspruch 1, wobei das Additiv ein eisendotiertes Silicium-Netzwerk, ein eisendotiertes Titandioxid-Netzwerk, ein eisendotiertes Titandioxid-Wolfram-Netzwerk oder eine Mischung davon umfasst.

## Revendications

1. Procédé d'élimination des composés volatils contenant du silicium (CVCS) à partir d'un flux d'air par oxydation photocatalytique sous ultraviolet (UV-OPC), le procédé comprenant le passage du flux d'air à travers un filtre, ledit filtre comprenant :
un corps de filtre comprenant au moins un élément choisi dans le groupe constitué d'un matériau de nanofibres, d'un matériau de microfibres, d'un matériau granulaire, d'un matériau homogène, d'un matériau cristallin, d'un matériau vitreux, d'un matériau à multimatériau, d'un matériau à structure stratifiée, d'un matériau à structure composite, et de leurs mélanges ; et
un additif fixé à une surface du corps de filtre et attirant chimiquement les composés volatils contenant du silicium (CVCS), dans lequel l'additif crée un site acide sur la surface du corps de filtre et ledit additif comprend au moins l'un parmi l'acide sulfurique, l'acide trifluorométhanesulfurique, un groupe acide sulfonique, et un polyélectrolyte contenant au moins un groupe acide sulfonique, ou dans lequel ledit additif comprend un matériau induisant une réaction qui est un réseau de silice dopé au fer, un réseau d'oxyde de titane dopé au fer, un réseau d'oxyde de titane/tungstène dopé au fer, ou un mélange de ceux-ci ; et
le passage du flux d'air depuis le filtre vers un réacteur photocatalytique.

2. Procédé selon la revendication 1, dans lequel le flux d'air comprend des composés organiques volatils (COV) et des CVCS, et dans lequel le réacteur photocatalytique réagit avec les COV.

3. Procédé selon la revendication 1, dans lequel l'additif crée un site acide sur la surface du filtre comprenant au moins l'un parmi l'acide sulfurique, l'acide trifluorométhanesulfurique, un groupe acide sulfonique, et un polyélectrolyte contenant au moins un groupe acide sulfonique.

4. Procédé selon la revendication 3, dans lequel le groupe acide sulfonique fait partie d'un hydrocarbure aliphatique, d'un hydrocarbure aromatique, d'une espèce polymère à base de carbone, d'une espèce polymère à base de silicium, ou d'une espèce polymère à base de phosphore.

5. Procédé selon la revendication 3, dans lequel l'additif comprend en outre un catalyseur.

6. Procédé selon la revendication 5, dans lequel le catalyseur comprend au moins un métal ou un élément d'oxyde choisi dans le groupe constitué du platine, du rhodium, du rhénium, du palladium, de l'or, de l'argent, de l'osmium, du ruthénium, de l'iridium et de leurs mélanges.

7. Procédé selon la revendication 3, dans lequel le corps de filtre comprend en outre au moins un élément choisi dans le groupe constitué du charbon actif, du charbon de bois, de l'argile acide, des résines échangeuses d'ions, des zéolithes acides, et de leurs mélanges.

8. Procédé selon la revendication 1, dans lequel l'additif comprend en outre un matériau qui augmente la superficie de la surface.

9. Procédé selon la revendication 8, dans lequel l'additif comprend en outre au moins un élément choisi dans le groupe constitué d'un gel d'oxyde, d'un gel d'oxyde métallique, d'un gel d'oxyde métallique mixte, d'un gel de silice, d'un gel de silice ayant une surface hydrophobe et d'un aérogel.

10. Procédé selon la revendication 9, dans lequel l'additif présente une liaison Si-0.

11. Procédé selon la revendication 1, dans lequel l'additif comprend un réseau de silice dopé au fer, un réseau d'oxyde de titane dopé au fer, un réseau d'oxyde de titane/tungstène dopé au fer, ou un mélange de ceux-ci.
